# EUROPÄISCHE PATENTSCHRIFT

(11) **EP 0 645 853 B1**
(45) Veröffentlichungstag und Bekanntmachung des Hinweises auf die Patenterteilung: **15.01.1997**
(21) Anmeldenummer: 94111270.8
(22) Anmeldetag: 20.07.1994
(51) Int. Cl.: H01R 25/14, F21S 1/14

(54) **Niedervoltinstallationssystem**
Low voltage installationsystem
Système d'installation pour basse tension

(30) Priorität: 23.09.1993 DE 9314392 U
(43) Veröffentlichungstag der Anmeldung: 29.03.1995
(73) Patentinhaber: Wiegelmann GmbH, D-59823 Arnsberg (DE)
(72) Erfinder: Wiegelmann, Horst, D-59821 Arnsberg (DE)
(74) Vertreter: Köchling, Conrad-Joachim

(56) Entgegenhaltungen:
- WO-A-90/03669
- DE-A- 4 214 005
- DE-U- 9 301 559
- FR-A- 2 639 410
- US-A- 5 154 509

## Beschreibung

Die Erfindung betrifft ein Niedervoltinstallationssystem, bestehend aus mindestens zwei biegesteifen, parallel zueinander verlegbaren elektrischen, isolationsfreien Leitern, Befestigungs- und Halterungsvorrichtungen zur ortsfesten Befestigung der Leiter, einer mit den Leitern verbindbaren Niedervolt-Stromquelle sowie an den Leitern mindestens mittelbar befestigbaren und elektrisch mit diesem verbindbaren Verbrauchern, wie Leuchten oder dergleichen, wobei die Leiter flach rechteckigen Querschnitt aufweisen und zueinander fluchtend mit Abstand und elektrisch isoliert voneinander gehaltert sind, wobei die Leiter ein mit den breiten Rechteckseiten einander benachbartes Leiterpaket bilden.

Ein derartiges Installationssystem ist aus dem G 93 01 513 U1 bekannt.

Im Stand der Technik sind schon Niedervoltinstallationssysteme bekannt, bei denen die Verbraucher mittels Adaptern ankuppelbar sind, wobei der Adapter mit Magneten versehen ist, die sowohl zur Kontaktierung der Leiter wie auch zum Sicherung des Adapters vorgesehen sind.

Ein solches System ist zum Beispiel aus Dokument FR-A-2 639 410 oder WO-A- 9003669 bekannt.

Der Erfindung liegt die Aufgabe zugrunde, mit solchen Niedervoltinstallationssystemen koppelbare Adapter und Halterungsvorrichtungen zu schaffen.

Zur Lösung dieser Aufgabe schlägt die Erfindung vor, daß die Verbraucher mittels Adaptern ankuppelbar sind, die aus Isolierstoff bestehen und mindestens einen, vorzugsweise zwei zueinander parallele Einsteckschlitze zum Aufschieben auf die flachen Leiter aufweisen, wobei der Adapter an gegenüberstehenden Seiten jeweils einen Magnetkontakt aufweisen, der mit einem Anschlußleiter oder Kabel verbindbar ist, an den ein elektrischer Verbraucher anschließbar ist, und die flachen Leiter aus magnetisierbarem Werkstoff bestehen, so daß bei auf die Leiter aufgeschobenem Adapter jeweils ein Magnetkontakt an einem im Einsteckschlitz des Adapters befindlichen Leiter kontaktierend und lagesichernd anliegt.

Vorzugsweise ist dabei vorgesehen, daß der Adapter zwei topfartige Aufnahmeteile aus Isolierstoff für passend geformte Magnetkontakte, insbesondere zylinderischer Form, aufweist, die mit den Mündungen zueinander gerichtet sind und zwischen denen insbesondere ein Abstandhalter aus Isolierstoff angeordnet ist, der zwischen die flachen Leiter einsteckbar ist, wobei zwischen der Mündung der Aufnahmeteile und dem Abstandhalter jeweils ein leiterdicker Schlitz gebildet ist, der dreiseitig offen ist und lediglich einenends durch ein Wandungsteil aus Isolierstoff geschlossen ist, welches den Abstandhalter mit den Aufnahmeteilen verbindet, daß die Aufnahmeteile in ihrer Wandung, insbesondere im zum Wandungsteil parallelen Wandungsbereich, Leitereinführöffnungen aufweisen und daß die Böden der Aufnahmeteile von Befestigungsmitteln, insbesondere Schrauben, durchsetzt sind, mittels derer die Magnetkontakte befestigbar sind.

Bevorzugt ist vorgesehen, daß von dem einen Aufnahmeteil auf der dem Einsteckschlitz abgewandten Seite ein Steg abragt, der eine Befestigungsanordnung für einen elektrischen Verbraucher mit Leiterdurchtrittsöffnung aufweist, wobei die Leitereintrittsöffnungen der Aufnahmeteile und die Leiterdurchtrittsöffnung der Befestigungsanordnung durch eine lösbar am Adapter befestigte Kappe abdeckbar ist.

Eine bevorzugte Weiterbildung wird darin gesehen, daß vom Steg zwei parallele Wandungsteile abragen, die an den Aufnahmeteilen und der Verbindungswand angeformt sind und die Abdeckkappe die so gebildete Höhlung abdeckt.

Auch kann bevorzugt sein, daß die Abdeckkappe das Bodenteil des keinen Steg aufweisenden Aufnahmeteiles als integralen Bestandteil aufweist.

Zudem ist bevorzugt, daß der zwischen den Aufnahmeteilen befindliche Abstandhalter eine zu den Aufnahmehöhlungen der Aufnahmeteile koaxial gerichtete und in der lichten Weite mindestens gleichgroße Durchschuböffnung für einen Magnetkontakt aufweist.

Eine in Kombination mit den vorhergehenden oder auch selbständig brauchbare Weiterbildung wird darin gesehen, daß die Halterungsvorrichtung zur ortsfesten, vorzugsweise deckenseitigen Befestigung der flachen Leiter aus einem Abstandhalter aus Isolierstoff besteht, der an gegenüberliegenden Seiten und in Längsverlaufrichtung der Leiter offene Aufnahmeschlitze für die Leiter aufweist und der ggf. über eine Verlängerungsstange oder dergleichen mit einer Wand- oder Deckenbefestigungsplatte verbunden ist.

Ein Ausführungsbeispiel der Erfindung ist in der Zeichnung gezeigt und im folgenden näher beschrieben.

Es zeigt:

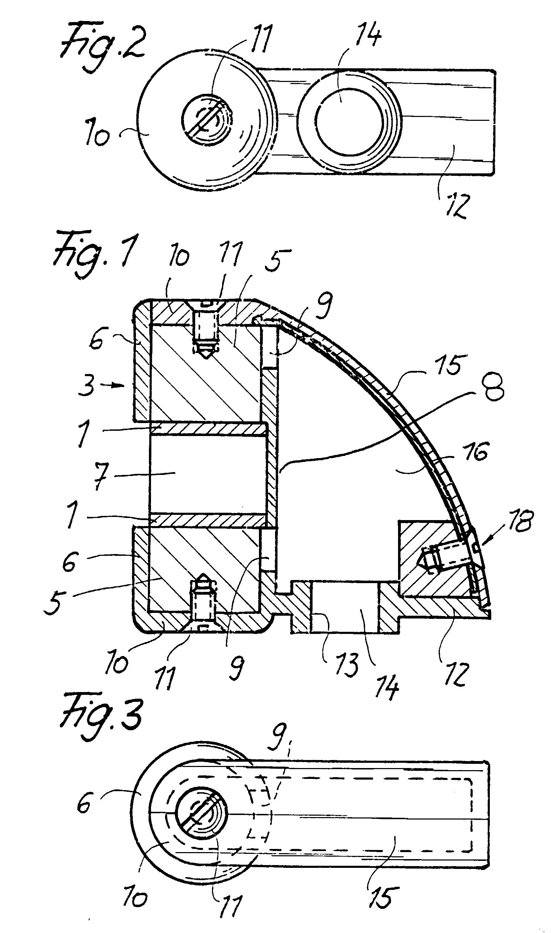

- Figur 1: einen erfindungsgemäßen Adapter in Seitenansicht, im Mittelschnitt gesehen;
- Figur 2: desgleichen von unten gesehen;

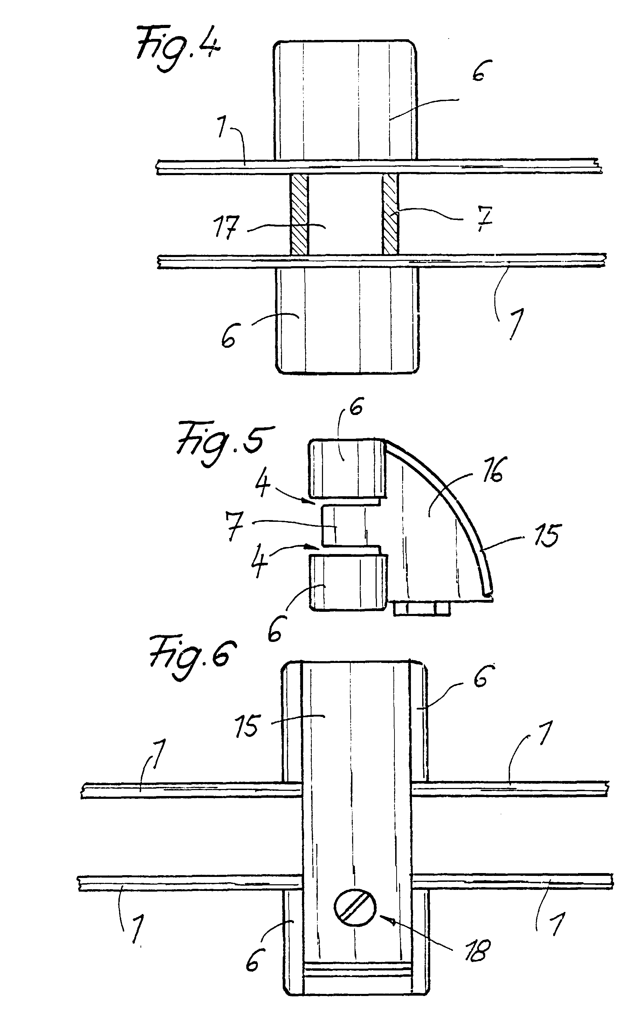

- Figur 3: desgleichen in Draufsicht;
- Figur 4: desgleichen in Vorderansicht;
- Figur 5: eine Seitenansicht ungeschnitten;

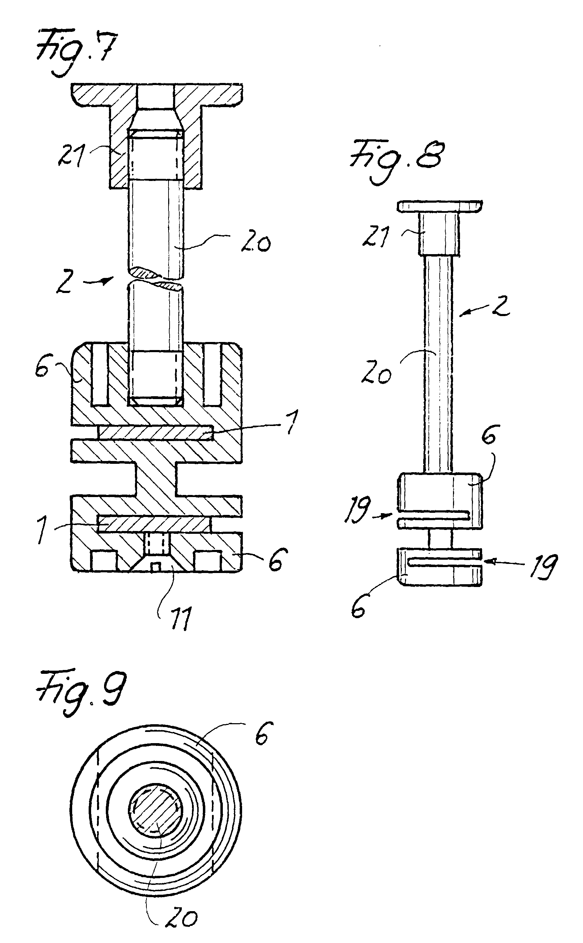

- Figur 6: eine Rückansicht;
- Figur 7: eine Halterungsvorrichtung in Seitenansicht im Mittellängsschnitt gesehen;
- Figur 8: die Halterungsvorrichtung in Seitenansicht ungeschnitten;
- Figur 9: eine Einzelheit in Draufsicht.

Das Niedervoltinstallationssystem besteht im wesentlichen aus zwei biegesteifen, parallel zueinander verlegten elektrischen, isolationsfreien Leitern 1, einer Befestigungs- und Haltevorrichtung 2 zur ortsfesten Befestigung der Leiter 1, einer mit den Leitern 1 verbindbaren Niedervoltstromquelle (nicht gezeigt) sowie an den Leitern mittels Adapter 3 befestigbaren elektrischen Verbrauchern wie Spotleuchten oder dergleichen.

Die Leiter 1 weisen flach rechteckigen Querschnitt auf und sind zueinander fluchtend mit Abstand und elektrisch isoliert voneinander angeordnet, wobei die Leiter ein mit den breiten Rechteckseiten einander benachbartes Leiterpaket bilden. In der normalen Installationslage, also bei deckenseitiger Befestigung, sind die Leiter parallel zueinander und übereinander angeordnet.

Entsprechende Verbraucher wie Spotleuchten oder dergleichen, sind mittels Adapter 3 ankuppelbar. Der Adapter 3 besteht aus Isolierstoff und weist zueinander parallele Einsteckschlitze 4 zum Aufschieben auf die flachen Leiter 1 auf. Der Adapter 3 weist zudem an gegenüberstehenden Seiten jeweils einen Magnetkontakt 5 auf, der mit einem Anschlußleiter oder Anschlußkabel verbindbar ist. An dieses Kabel ist ein elektrischer Verbraucher anschließbar. Die flachen Leiter 1 bestehen dabei aus magnetisierbarem Werkstoff, so daß bei auf die Leiter 1 aufgeschobenem Adapter 3 jeweils ein Magnetkontakt 5 an einem im jeweiligen Einsteckschlitz 4 des Adapters 3 befindlichen Leiter 1 kontaktierend und lagesichernd anliegt. Hierdurch ist die Montage des Adapters 3 sehr vereinfacht, da dieser lediglich seitlich auf die Leiter 1 mit den Einsteckschlitzen 4 aufgeschoben werden muß.

Die elektrische Kontaktierung und auch die mechanische Halterung erfolgt durch die Magnetkontakte 5, die in der Einbaulage mit den Leitern 1 in innigem Kontakt sind.

Der Adapter 3 besteht aus zwei topfartigen Aufnahmeteilen 6 aus Isolierstoff für passend geformte Magnetkontakte 5, die insbesondere zylinderische Formen aufweisen. Die topfartigen Aufnahmeteile 6 sind mit den Mündungen zueinander gerichtet. Zwischen ihnen ist ein Abstandhalter 7 aus Isolierstoff angeordnet, der zwischen die flachen Leiter 1 bei aufgestecktem Adapter 3 eingesteckt ist. Zwischen der Mündung der Aufnahmeteile 6 und dem Abstandhalter 7 ist jeweils ein leiterdicker Schlitz 4 ausgebildet, der dreiseitig offen ist und lediglich einenends durch ein Wandungsteil 8 aus Isolierstoff geschlossen ist. Dieses Wandungsteil 8 verbindet den Abstandhalter 7 mit den Aufnahmeteilen 6.

Die Aufnahmeteile 6 weisen in ihrer Wandung, im Ausführungsbeispiel im zum Wandungsteil 8 parallelen Wandungsbereich Leitereinführöffnungen 9 auf. Die Böden 10 der Aufnahmeteile 6 sind von Befestigungsmitteln 11 in Form von Schrauben durchsetzt, mittels derer die Magnetkontakte 5 an den Aufnahmeteilen 6 befestigbar sind.

Von dem einen Aufnahmeteil 6 ragt auf der dem Einsteckschlitz 4 abgewandten Seite ein Steg 12 ab, der eine Befestigungsanordnung 13 für einen elektrischen Verbraucher, beispielsweise eine Spotleuchte, mit Leiterdurchtrittsöffnung 14 aufweist, wobei die Leitereintrittsöffnungen 9 der Aufnahmeteile 6 und die Leiterdurchtrittsöffnung 14 der Befestigungsanordnung 13 durch eine lösbar am Adapter 3 befestigte Kappe 15 abdeckbar ist. Im Ausführungsbeispiel ragen vom Steg 12 zwei parallele Wandungsteile 16 ab, die an den Aufnahmeteilen 6 und der Verbindungswand 8 angeformt sind. Die Abedeckkappe 15 deckt die so gebildete Höhlung ab. Dabei ist die Abdeckkappe 15 einstückig mit dem Bodenteil 10 des keinen Steg aufweisenden Aufnahmeteiles 6 (in Zeichnungsfigur 1 oben) ausgebildet.

Der zwischen den Aufnahmeteilen 6 befindliche Abstandhalter 7 weist eine zu den Aufnahmehöhlungen der Aufnahmeteile 6 koaxial gerichtete und in der lichten Weite mindestens gleichgroße Durchschuböffnung 17 für einen Magnetkontakt 5 auf. Zur Montage des Adapters kann die Abdeckkappe 15 entfernt werden und zunächst der in der Zeichnungsfigur 1 untere Magnetkontakt lagerichtig in das Aufnahmeteil 6 von oben eingeführt werden. Die Befestigung erfolgt dann mittels der Schraube 11. Dabei kann durch die Leitereinführöffnung 9 ein elektrischer Leiter (isoliert) in die entsprechende Höhlung eingesetzt werden, dessen abisoliertes Ende mit dem Magnetkontakt 5 in Verbindung steht. Gleichfalls kann durch die obere Einführöffnung 9 das abisolierte Ende eines weiteren Leiters eingesetzt werden und der entsprechende Magnetkontakt 5 in das obere Aufnahmeteil 6 eingesetzt werden. Die entsprechenden Leiter können dann aus der Leiteraustrittsöffnung 14 herausgeführt werden. Anschließend kann die Abdeckkappe 15 aufgesetzt und der Magnetkontakt 5 durch Anordnung der Schraube 11 fixiert werden, wobei die Abdeckkappe 15 zusätzlich durch eine im Bereich 18 angeordnete Befestigungsschraube fixiert werden kann.

Der Adapter ist damit betriebsbereit. Es kann an die Befestigungseinrichtung 13 ein entsprechender Verbraucher oder auch eine Anschlußleitung angeschlossen werden. Der Adapter 3 kann in einfacher Weise seitlich auf die flachen Leiter 1 aufgeschoben werden, wobei er durch die Magnetkraft fixiert und gleichzeitig kontaktiert ist.
In den Figuren 7 bis 9 ist eine Halterungsvorrichtung 2 zur ortsfesten, vorzugsweise deckenseitigen Befestigung der flachen Leiter 1 gezeigt. Der entsprechende Abstandhalter besteht dabei aus Isolierstoff. Er weist an gegenüberliegenden Seiten in entgegengesetzter Richtung und in Längsverlaufrichtung der Leiter 1 offene Aufnahmeschlitze 19 für die Leiter 1 auf. Er ist über eine Verlängerungsstange 20 mit einer Wand- oder Deckenbefestigungsplatte 21 verbunden. Mittels dieses Abstandhalters kann in einfacher Weise die Fixierung der flachen Leiter 1 an beliebigen Punkten in ordnungsgemäßer Lage zueinander erfolgen.

Der Adapter 3 kann auch ohne den Abstandhalter 7 ausgebildet sein, so daß der Bereich zwischen den Mündungen der Aufnahmeteile 6 frei von Wandungsteilen ist, mit Ausnahme des Wandungsteiles 8, welches die Verbindung zwischen den Aufnahmeteilen 6 herstellt. Es ist dann nur ein Schlitz ausgebildet, der zur Aufnahme der Leiter 1 dient und der sich von der Mündung des oberen Aufnahmeteiles 6 bis zur Mündung des unteren Aufnahmeteiles erstreckt.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Niedervoltinstallationssystem, bestehend aus mindestens zwei biegesteifen, parallel zueinander verlegbaren elektrischen, isolationsfreien Leitern, Befestigungs- und Halterungsvorrichtungen zur ortsfesten Befestigung der Leiter, einer mit den Leitern verbindbaren Niedervolt-Stromquelle sowie an den Leitern mindestens mittelbar befestigbaren und elektrisch mit diesem verbindbaren Verbrauchern, wie Leuchten oder dergleichen, wobei die Leiter einen flach rechteckigen Querschnitt aufweisen und zueinander fluchtend mit Abstand und elektrisch isoliert voneinander gehaltert sind, wobei die Leiter ein mit den breiten Rechteckseiten einander benachbartes Leiterpaket bilden, **dadurch gekennzeichnet,** daß die Verbraucher mittels Adaptern (3) ankuppelbar sind, die aus Isolierstoff bestehen und mindestens einen, vorzugsweise zwei zueinander parallele Einsteckschlitze (4) zum Aufschieben auf die flachen Leiter (1) aufweisen, wobei die Adapter (3) an gegenüberstehenden Seiten jeweils einen Magnetkontakt (5) aufweisen, der mit einem Anschlußleiter oder Kabel verbindbar ist, an den ein elektrischer Verbraucher anschließbar ist, und die flachen Leiter (1) aus magnetisierbaren Werkstoff bestehen, so daß bei auf die Leiter (1) aufgeschobenem Adapter (3) jeweils ein Magnetkontakt (5) an einem im Einsteckschlitz (4) des Adapters (3) befindlichen Leiter (1) kontaktierend und lagesichernd anliegt.

2. System nach Anspruch 1, **dadurch gekennzeichnet,** daß der Adapter (3) zwei topfartige Aufnahmeteile aus Isolierstoff (6) für passend geformte Magnetkontakte (5), insbesondere zylinderischer Form, aufweist, die mit den Mündungen zueinander gerichtet sind und zwischen denen insbesondere ein Abstandhalter (7) aus Isolierstoff angeordnet ist, der zwischen die flachen Leiter (1) einsteckbar ist, wobei zwischen den Mündungen der Aufnahmeteile (6) und dem Abstandhalter (7) jeweils ein leiterdicker Schlitz (4) gebildet ist, der dreiseitig offen ist und lediglich einenends durch ein Wandungsteil (8) aus Isolierstoff geschlossen ist, welches den Abstandhalter (7) mit den Aufnahmeteilen (6) verbindet, daß die Aufnahmeteile (6) in ihrer Wandung, insbesondere im zum Wandungsteil parallelen Wandungsbereich, Leitereinführöffnungen (9) aufweisen und daß die Böden (10) der Aufnahmeteile (6) von Befestigungsmitteln (11), insbesondere Schrauben, durchsetzt sind, mittels derer die Magnetkontakte (5) befestigbar sind.

3. System nach Anspruch 1 oder 2, **dadurch gekennzeichnet,** daß von dem einen Aufnahmeteil (6) auf der dem Einsteckschlitz (4) abgewandten Seite ein Steg (12) abragt, der eine Befestigungsanordnung (13) für einen elektrischen Verbraucher mit Leiterdurchtrittsöffnung (14) aufweist, wobei die Leitereintrittsöffnungen (9) der Aufnahmeteile (6) und die Leiterdurchtrittsöffnung (14) der Befestigungsanordnung (13) durch eine lösbar am Adapter (3) befestigte Kappe (15) abdeckbar ist.

4. System nach einem der Ansprüche 1 bis 3,
**dadurch gekennzeichnet,** daß vom Steg (12) zwei parallele Wandungsteile (16) abragen, die an den Aufnahmeteilen (6) und der Verbindungswand (8) angeformt sind, und die Abdeckkappe (15) die so gebildete Höhlung abdeckt.

5. System nach Anspruch 4,
**dadurch gekennzeichnet,** daß die Abdeckkappe (15) das Bodenteil (10) des keinen Steg aufweisenden Aufnahmeteiles (6) als integralen Bestandteil aufweist.

6. System nach einem der Ansprüche 1 bis 5,
**dadurch gekennzeichnet,** daß der zwischen den Aufnahmeteilen (6) befindliche Abstandhalter (7) eine zu den Aufnahmehöhlungen der Aufnahmeteile (6) koaxial gerichtete und in der lichten Weite mindestens gleichgroße Durchschuböffnung (17) für einen Magnetkontakt (5) aufweist.

7. System nach einem der Ansprüche 1 bis 6, **dadurch gekennzeichnet,** daß die Halterungsvorrichtung zur ortsfesten, vorzugsweise deckenseitigen Befestigung der flachen Leiter (1) aus einem Abstandhalter (2) aus Isolierstoff besteht, der an gegenüberliegenden Seiten und in Längsverlaufsrichtung der Leiter (1) offene Aufnahmeschlitze (19) für die Leiter (1) aufweist und der ggf. über eine Verlängerungsstange (20) oder dergleichen mit einer Wand- oder Deckenbefestigungsplatte (21) verbunden ist.

## Claims

1. Low-voltage installation system, comprising at least two bending-resistant, electrical, insulation-free conductors which can be laid in parallel with one another, attachment and mounting devices for the fixed attachment of the conductors, a low-voltage current source which can be connected to the conductors, and also loads, such as light fittings or the like, which are attachable at least indirectly to the conductors and are electrically connectable to the latter, wherein the conductors have shallow rectangular cross section and are mounted in a mutually aligned manner at a distance and are electrically insulated from one another, and wherein the conductors form a conductor assembly whose wide rectangular sides are mutually adjacent to one another, characterized in that the loads can be coupled by means of adapters (3) which are composed of insulating material and which have at least one, preferably two, mutually parallel insertion slots (4) for pushing onto the flat conductors (1), wherein the adapter (3) has a magnetic contact (5) in each case at opposite sides, which magnetic contact can be connected to a connecting conductor or cable to which an electrical load can be connected and the flat conductors (1) are composed of a magnetizable material so that, with adapter (3) pushed onto the conductors (1), a magnetic contact (5) is adjacent in each case in a contacting and position-securing manner to a conductor (1) situated in the insertion slot (4) of the adapter (3) .

2. System according to Claim 1, characterized in that the adapter (3) has two pot-type receiving parts made of insulating material (6) for appropriately shaped magnetic contacts (5), in particular of cylindrical shape, which are directed towards one another by means of the openings and between which, in particular, a spacer (7) is arranged which is composed of insulating material and which can be inserted between the flat conductors (1), wherein a conductor-thick slot (4) is formed in each case between the openings of the receiving parts (6) and the spacer (7), which conductor-thick slot is open on three sides and is closed only at one end by a wall part (8) composed of insulating material which joins the spacer (7) to the receiving parts (6), in that the receiving parts (6) have conductor inlet openings (9) in their wall, in particular in the wall region parallel to the wall part, and in that the bases (10) of the receiving parts (6) are penetrated by attachment means (11), in particular screws, by means of which the magnetic contacts (5) can be attached.

3. System according to Claim 1 or 2, characterized in that, on the side remote from the insertion slot (4) a web (12) which has an attachment arrangement (13) for an electrical load with conductor passage opening (14) projects from the one receiving part (6), wherein the conductor passage openings (9) of the receiving parts (6) and the conductor passage opening (14) of the attachment arrangement (13) can be covered by a cap (15) detachably attached to the adapter (3).

4. System according to one of Claims 1 to 3, characterized in that two parallel wall parts (16) which are formed onto the receiving parts (6) and the connecting wall (8) project from the web (12) and the covering cap (15) covers the cavity formed in this way.

5. System according to Claim 4, characterized in that the covering cap (15) has the base part (10) of the receiving part (6) not having a web as an integral component.

6. System according to one of Claims 1 to 5, characterized in that the spacer (7) situated between the receiving parts (6) has a push-through opening (17) for a magnetic contact (5), which push-through opening is coaxially directed towards the receiving cavities of the receiving parts (6) and is at least of the same size in the internal clearance.

7. System according to one of Claims 1 to 6, characterized in that the mounting device for the fixed, preferably cover-side attachment of the flat conductors (1) comprises a spacer (2) which is composed of insulating material and which has on opposite sides receiving slots (19) which are open in the longitudinal extension direction of the conductors (1) for the conductors (1) and which is joined, optionally via an extension bar (20) or the like, to a wall-mounting or cover-mounting plate (21).

## Revendications

1. Système pour installation à basse tension, constitué par au moins deux conducteurs électriques non isolés qui résistent à la flexion et qui peuvent être posés parallèlement entre eux, par des dispositifs de fixation et de maintien destinés au montage à poste fixe des conducteurs, et par une source de courant à basse tension qui peut être reliée aux conducteurs, ainsi que par des dispositifs d'utilisation, comme des lampes ou similaires, qui peuvent être fixés aux conducteurs, du moins indirectement, et qui peuvent être reliés électriquement à ceux-ci, cependant que les conducteurs présentent une section transversale rectangulaire plate et qu'ils sont maintenus à distance l'un de l'autre en étant alignés entre eux et isolés électriquement l'un de l'autre, et cependant que les conducteurs forment une superposition de conducteurs voisins les uns des autres par les grands côtés du rectangle, caractérisé par le fait que les dispositifs d'utilisation peuvent être accouplés au moyen d'adaptateurs (3) qui sont constitués par une matière isolante et qui présentent au moins une fente à enfoncement (4), et de préférence deux qui sont parallèles entre elles, en vue de les pousser sur les conducteurs plats (1), cependant que l'adaptateur (3) présente à chaque fois sur des côtés opposés un contact magnétique (5) qui peut être relié à un conducteur de raccordement ou à un câble auquel peut être raccordé un dispositif électrique d'utilisation, et que les conducteurs plats (1) sont constitués par une matière magnétisable, de sorte que, lorsque l'adaptateur (3) est poussé sur les conducteurs (1), un contact magnétique (5) porte à chaque fois sur un conducteur (1) qui se trouve dans la fente à enfoncement (4) de l'adaptateur (3) en établissant le contact et en fixant la position.

2. Système selon la revendication 1, caractérisé par le fait que l'adaptateur (3) présente deux logements (6) en forme de pots en matière isolante qui sont destinés à des contacts magnétiques (5) de forme adaptée, et en particulier de forme cylindrique, qui sont dirigés l'un vers l'autre et entre lesquels est disposée en particulier une entretoise (7) en matière isolante, celle-ci pouvant être enfoncée entre les conducteurs plats (1), cependant qu'est formée à chaque fois, entre les embouchures des logements (6) et l'entretoise (7), une fente (4) dont l'épaisseur est celle des conducteurs, qui est ouverte sur trois côtés et qui n'est fermée que d'un côté par une partie de paroi (8) en matière isolante, celle-ci reliant l'entretoise (7) aux logements (6), par le fait que les logements (8) présentent des ouvertures d'introduction de conducteurs (9) dans leur paroi, et en particulier dans la région de leur paroi qui est parallèle à la partie de paroi, et par le fait que les fonds (10) des logements (6) sont traversés par des moyens de fixation (11), et en particulier par des vis, au moyen desquels les contacts magnétiques (5) peuvent être fixés.

3. Système selon la revendication 1 ou 2, caractérisé par le fait qu'une semelle (12) fait saillie depuis l'un des logements (6), sur son côté opposé à la fente à enfoncement (4), et qu'elle présente un agencement de fixation (13) qui est destiné à un dispositif électrique d'utilisation et qui est pourvu d'une ouverture de passage d'un conducteur (14), cependant que les ouvertures d'entrée des conducteurs (9) des logements (6) et l'ouverture de passage d'un conducteur (14) de l'agencement de fixation (13) peuvent être recouvertes par un capuchon (15) qui est fixé à l'adaptateur (3) d'une manière amovible.

4. Système selon l'une des revendications 1 à 3, caractérisé par le fait que deux parties de paroi parallèles (16) font saillie depuis la semelle (12), qu'elles sont formées sur les logements (6) et sur la paroi de liaison (8), et que le capuchon de recouvrement (15) recouvre la cavité ainsi formée.

5. Système selon la revendication 4, caractérisé par le fait que le capuchon de recouvrement (15) comporte comme élément constitutif d'un seul tenant la partie de fond (10) du logement (6) qui ne présente pas de semelle.

6. Système selon l'une des revendications 1 à 5, caractérisé par le fait que l'entretoise (7) située entre les logements (6) présente une ouverture de passage (17) qui est destinée à un contact magnétique (5), qui est dirigée d'une manière coaxiale par rapport aux cavités des logements (6) et qui présente au moins la même cote de passage.

7. Système selon l'une des revendications 1 à 6, caractérisé par le fait que le dispositif de maintien qui est destiné à fixer les conducteurs plats (1) à poste fixe, de préférence du côté du plafond, est constitué par une entretoise en matière isolante (2), cependant que celle-ci présente, sur des côtés opposés, des fentes formant logements (19) qui sont destinées aux conducteurs (1) et qui sont ouvertes dans la direction longitudinale des conducteurs (1), et qu'elle est reliée le cas échéant à une plaque (21) de fixation sur un mur ou sur un plafond par l'intermédiaire d'une tige de prolongement (20) ou similaire.
